(19)

Europäisches
Patentamt
European
Patent Office
Office européen
des brevets

(11)  **EP 4 266 618 A1**

(12)  **EUROPEAN PATENT APPLICATION**

(43) Date of publication:
**25.10.2023  Bulletin 2023/43**

(21) Application number: **23168369.9**

(22) Date of filing: **18.04.2023**

(51) International Patent Classification (IPC):
**H04L 5/00** (2006.01)          **H04W 72/23** (2023.01)

(52) Cooperative Patent Classification (CPC):
**H04L 5/0053**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022  GB 202205683**

(71) Applicant: **Nokia Technologies Oy
02610 Espoo (FI)**

(72) Inventors:
• **TIIROLA, Esa Tapani
90620 Oulu (FI)**
• **HAKOLA, Sami-Jukka
90450 Kempele (FI)**
• **RANTA-AHO, Karri Markus
02600 Espoo (FI)**

(74) Representative: **Nokia EPO representatives
Nokia Technologies Oy
Karakaari 7
02610 Espoo (FI)**

(54)  **MONITORING A CHANNEL WITH PUNCTURED RESOURCE ELEMENTS IN TELECOMMUNICATIONS SYSTEMS**

(57)    An apparatus and method facilitating communication using reduced bandwidth NR transmissions, where some part of the bandwidth defined by the CORESET is punctured and not available for the reduced bandwidth NR signals. The user equipment receiving these signals determines that puncturing is applied to some frequency domain resource elements within the bandwidth and identifies at least one valid candidate resource within the bandwidth. The at least one valid candidate resource comprises a candidate resource with less than at least one predetermined threshold amount of punctured resource elements. The user equipment then only monitors a subset of the plurality of candidate resources, the subset consisting of the at least one valid candidate resource and skips monitoring of the candidate resources that it deems to be invalid.

FIG. 6

EP 4 266 618 A1

**Description**

TECHNOLOGICAL FIELD

Various example embodiments relate generally to wireless communications, and more particularly to puncturing of frequency domain resource elements within a bandwidth of a radio communication channel.

BACKGROUND

Extending 5G services to certain specialized vertical use cases calls for the ability to deploy new radio (NR) in dedicated spectrum bandwidths below 5MHz. For example, in Europe it has been decided that the Future Railway Mobile Communication System (FRMCS) which will replace GSM-R (global system for mobiles - railway) will use NR. Soft migration from GSM-R to FRMCS is expected to take place between around 2025 and 2035; this will require co-existence of GSM-R and NR within $2 \times 5.6$ MHz of FDD (frequency division duplex) spectrum, leaving approximately 3.6 MHz for NR operation. Other similar use cases include smart grids ($2 \times 3$ MHz FDD in US) and public safety ($2 \times 3$ MHz FDD in Europe).

One way to provide the reduced bandwidth signals might be to adapt NR to the available dedicated spectrum allocations and to apply puncturing to one or both frequency ends of the radio communication channel. These punctured resource elements might be used for transmission of the other co-existing signals. Some adaptations to NR devices and infrastructure may be required to support such changes.

BRIEF SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to various, but not necessarily all, embodiments of the invention there is provided an apparatus comprising: means for monitoring a plurality of candidate resources within a bandwidth of a radio communication channel; means for determining that puncturing is applied to some frequency domain resource elements within said bandwidth; means for identifying at least one valid candidate resource within said bandwidth, said at least one valid candidate resource comprising less than at least one predetermined threshold amount of punctured resource elements; wherein said means for monitoring is configured to monitor a subset of said plurality of candidate resources, said subset consisting of said at least one valid candidate resource.

The inventors recognised that there may be times, where it might be helpful to adapt NR signalling to accommodate reduced dedicated spectrum bandwidths. It might also be helpful to accommodate coexistence with other signals in the radio communication channel being used for the transmission of reduced bandwidth signals. In order to provide such functionality with minimal or at least few changes and using much of the existing infrastructure and NR ecosystem, puncturing is proposed. Puncturing involves some of the radio communication channel bandwidth generally used for NR communications not being allocated for transmission of NR signals and in some cases being reserved for the transmission of other signals. A potential drawback of such an arrangement is that any apparatus monitoring for NR signals in the radio communication channel may get false results from signals transmitted in the punctured resources if these resources are monitored. In order to address this potential problem prior to monitoring candidate resources within a channel to which it is determined that puncturing is applied, an apparatus identifies candidate resources that are punctured and therefore not available for carrying the signal being monitored for and these candidate resources are determined to be invalid and are removed from the set of candidate resources that are to be monitored. This not only reduces the energy consumption of such monitoring, it also increases the accuracy of the process.

A punctured resource may be considered to be punctured and therefore not a valid candidate resource in dependence upon the amount or relative amount of punctured resource elements that it has. So for example, if more than 50% of the candidate resource is not punctured it may be considered valid, while if less than 50% is not punctured, so more than 50% is punctured then in some embodiments that candidate resource may be considered invalid and removed from the set of candidate resources that are to be monitored.

In some example embodiments, said bandwidth of said communication channel is determined by the CORESET (control resource set). CORESET is a set of physical resources (i.e., a specific area on NR Downlink Resource Grid) and a set of parameters that is used to carry PDCCH/DCI (physical downlink control channel/ downlink control information). In some scenarios described in this application, CORESET defines, among other parameters, a bandwidth available for the radio communication channel, which in this case is PDCCH, that is larger than the allowed bandwidth for NR reduced bandwidth dedicated spectrum. The bandwidth (i.e. the size of CORESET in the frequency domain) defines the frequency domain resources available for PDCCH. The actual resources vary from PDCCH candidate to another, according to various parameters. These parameters may include the hashing function, aggregation level, and other configuration parameters.

In some example embodiments, said means for monitoring is configured for each valid candidate resource within said subset to determine whether said valid candidate resource comprises at least one punctured frequency domain resource element and where so to apply a masking function to mask a punctured portion of said at least one valid candidate resource prior to monitoring said at least one valid candidate resource.

In some example embodiments, said at least one predetermined threshold amount comprises a percentage value indicative of a ratio of punctured frequency domain resource elements and all frequency domain resource elements within said candidate resource.

In other example embodiments, said at least one predetermined threshold amount comprises an indication of a number of frequency domain resource elements that are punctured within said valid candidate resource.

In some example embodiments, said set of candidate resources comprise candidate resources of at least two different sizes in at least two different aggregation levels.

In some example embodiments, said means for identifying said at least one valid candidate resource is configured to compare punctured frequency domain resource elements within said plurality of candidate resources with a plurality of predetermined threshold amounts.

In some example embodiments, said means for identifying said at least one valid candidate resource is configured to compare punctured frequency domain resource elements within said plurality of candidate resources in at least two of said at least two different aggregation levels with at least two corresponding different predetermined threshold amounts.

In some cases, the different aggregation levels may have corresponding different thresholds or a subset of them may. This may reflect the size of the candidate resources within the aggregation levels, larger candidate resources generally being able to support more puncturing and still be decodable.

In some example embodiments, said apparatus further comprises means for determining said at least one predetermined threshold amount.

In some example embodiments, said means for determining said at least one predetermined threshold amount comprises means for receiving a signal comprising an indication of said at least one predetermined threshold amount.

In some example embodiments, said means for determining that puncturing is applied to some frequency domain resource elements within said bandwidth comprises receiving a signal indicating puncturing is applied.

In some example embodiments, said signal indicating puncturing is applied further comprises an indication of which frequency domain resource elements are subject to puncturing.

In some example embodiments, said means for determining that puncturing is applied to some frequency domain resource elements within said bandwidth comprises determining from a synchronization raster point at which the primary and secondary synchronisation signals are detected and a location of a synchronisation block that puncturing is applied.

In some example embodiments, said plurality of candidate resources are located within a user equipment defined search space and are located within said search space according to a hashing function, said hashing function comprising a number of frequency domain resource elements within said bandwidth of said radio communication channel as an input value; wherein said means for monitoring is configured to monitor said subset of said plurality of candidate resources by using said hashing function adjusted to reflect said puncturing to locate said candidate resources, said hashing function being adjusted such that said number of frequency domain resource elements input to said hashing function is reduced to a number of said valid frequency domain resource elements.

In some example embodiments, said means for determining that puncturing is applied is configured to determine that puncturing is applied at a low end of said bandwidth and said means for monitoring is configured to monitor said subset of said plurality of candidate resources by using said hashing function further adjusted to shift a starting frequency point by an amount reflecting an amount of puncturing at a lower end of said bandwidth.

In some example embodiments, said radio communication channel comprises a control channel, in some cases a physical downlink control channel.

In some example embodiments, said apparatus comprises a decoding means for decoding control signals received in said at least one valid candidate resource of said control channel, said apparatus being configured to operate according to said decoded control signals.

In some example embodiments, said frequency domain resource elements comprise physical resource blocks.

In other example embodiments, said frequency domain resource elements comprise control channel elements.

In some example embodiments, the means comprise: at least one processor; and at least one memory including computer program code, the at least one memory and computer program code being configured to, with the at least one processor, cause the performance of the apparatus.

According to various, but not necessarily all, embodiments of the invention there is provided an apparatus comprising means for generating a signal indicating that puncturing is to be applied to a bandwidth of a radio communication channel, said signal providing an indication of frequency domain resource elements within said bandwidth that are to be punctured.

In some example embodiments, said apparatus comprises means for outputting said generated signal.

In some example embodiments, said apparatus is configured to transmit new radio reduced bandwidth signals within dedicated spectrum bandwidths of less than 5MHZ.

In some example embodiments, said apparatus is configured to transmit said new radio reduced bandwidth signals within a portion of said radio communication channel, and other signals within a further portion of said radio communication channel.

In some example embodiments, said further portion is said punctured portion.

In some example embodiments, said means for generating is further configured to generate a signal indicative of at least one of a threshold amount of punctured frequency domain resource elements within said candidate resources, frequency domain resource elements within said candidate resources below said threshold amount being indicative of a valid candidate resource.

In some example embodiments, said means for generating is further configured to generate a signal indicative of a plurality of predetermined threshold amounts of punctured frequency domain resource elements corresponding to a plurality of different aggregation levels.

In some example embodiments, said means for generating is further configured to generate and output a synchronization raster point at which the primary and secondary synchronisation signals are to be output and a location of a synchronisation block, said raster point and location of said synchronisation block being dependent upon the puncturing that is applied.

In some example embodiments, the means comprise: at least one processor; and at least one memory including computer program code, the at least one memory and computer program code being configured to, with the at least one processor, cause the performance of the apparatus.

According to various, but not necessarily all, embodiments of the invention there is provided a wireless communication system comprising an apparatus, comprising: means for monitoring a plurality of candidate resources within a bandwidth of a radio communication channel; means for determining that puncturing is applied to some frequency domain resource elements within said bandwidth; means for identifying at least one valid candidate resource within said bandwidth, said at least one valid candidate resource comprising less than at least one predetermined threshold amount of punctured resource elements; wherein said means for monitoring is configured to monitor a subset of said plurality of candidate resources, said subset consisting of said at least one valid candidate resource; and an apparatus comprising means for generating a signal indicating that puncturing is to be applied to a bandwidth of a radio communication channel, said signal providing an indication of frequency domain resource elements within said bandwidth that are to be punctured.

According to various, but not necessarily all, embodiments of the invention there is provided according to an aspect a method comprising: monitoring a plurality of candidate resources within a bandwidth of a radio communication channel; determining that puncturing is applied to some frequency domain resource elements within said bandwidth; identifying at least one valid candidate resource within said bandwidth, said at least one valid candidate resource comprising less than at least one predetermined threshold amount of punctured resource elements; wherein said step of monitoring comprises monitoring a subset of said plurality of candidate resources, said subset consisting of said at least one valid candidate resource.

In some example embodiments, said step of monitoring comprises for each valid candidate resource within said subset determining whether said valid candidate resource comprises at least one punctured resource element and where so applying a masking function to mask a punctured portion of said at least one valid candidate resource prior to monitoring said at least one valid candidate resource.

Where the valid candidate resource has a punctured portion of less than the threshold amount, then prior to monitoring it a masking function may be applied, such that the punctured portion is masked and only the non-punctured portion is monitored.

In some example embodiments, said step of identifying said at least one valid candidate resource comprises comparing punctured resource elements within said plurality of candidate resources with a plurality of predetermined threshold amounts.

In some example embodiments, said step of identifying said at least one valid candidate resource comprises comparing punctured resource elements within said plurality of candidate resources in at least two of said at least two different aggregation levels with at least two corresponding different predetermined threshold amounts.

In some example embodiments, said method further comprises determining said at least one predetermined threshold amount.

In some example embodiments, said step of determining said at least one predetermined threshold amount comprises receiving a signal comprising an indication of said at least one predetermined threshold amount.

In some example embodiments, said step of determining that puncturing is applied to some frequency domain resource elements within said bandwidth comprises receiving a signal indicating puncturing is applied.

In some example embodiments, said step of determining that puncturing is applied to some frequency domain resource elements within said bandwidth comprises determining from a synchronization raster point at which the primary and secondary synchronisation signals are detected and a location of a synchronisation block that puncturing is applied.

In some example embodiments, said plurality of candidate resources are located within a user equipment defined search space and are located within said search space according to a hashing function, said hashing function comprising a number of frequency domain resource elements within said bandwidth of said radio communication channel as an input value; wherein said step of monitoring said subset of said plurality of candidate resources comprises using said hashing function adjusted to reflect said puncturing to locate said candidate resources, said hashing function being adjusted such that said number of frequency domain resource elements input to said hashing function is reduced to a number of said valid resource elements.

In some example embodiments, said step of determining that puncturing is applied comprises determining that puncturing is applied at a low end of said bandwidth and said step of monitoring monitors said subset of said plurality of candidate resources by using said hashing function further adjusted to shift a starting frequency point by an amount reflecting an amount of puncturing at a lower end of said bandwidth.

In some example embodiments, said method further comprises decoding control signals received in said at least one valid candidate resource of said control channel, and operating according to said decoded control signals.

According to various, but not necessarily all, embodiments of the invention there is provided according to a further aspect a method comprising generating a signal indicating that puncturing is to be applied to a bandwidth of a radio communication channel, said signal providing an indication of frequency domain resource elements within said bandwidth that are to be punctured.

In some example embodiments, said method comprises outputting said generated signal.

In some example embodiments, said method comprises transmitting new radio reduced bandwidth signals within dedicated spectrum bandwidths of less than 5MHZ.

In some example embodiments, said method comprises transmitting said new radio reduced bandwidth signals within a portion of said radio communication channel, and other signals within a further portion of said radio communication channel.

In some example embodiments, said method further comprises generating a signal indicative of at least one of a threshold amount of punctured frequency domain resource elements within said candidate resources, frequency domain resource elements within said candidate resources below said threshold amount being indicative of a valid candidate resource.

In some example embodiments, said method comprises generating a signal indicative of a plurality of predetermined threshold amounts of punctured frequency domain resource elements corresponding to a plurality of different aggregation levels.

In some example embodiments, said method comprises generating and outputting a synchronization raster point at which the primary and secondary synchronisation signals are to be output and a location of a synchronisation block, said raster point and location of said synchronisation block indicating that puncturing is applied.

According to various, but not necessarily all, embodiments of the invention there is provided a computer program which when executed by a processer on an apparatus is operable to control said apparatus to perform a method according to an aspect or a further aspect.

According to various, but not necessarily all, embodiments of the invention there is provided an apparatus comprising: circuitry configured to monitor a plurality of candidate resources within a bandwidth of a radio communication channel; circuitry configured to determine that puncturing is applied to some frequency domain resource elements within said bandwidth; circuitry configured to identify at least one valid candidate resource within said bandwidth, said at least one valid candidate resource comprising less than at least one predetermined threshold amount of punctured resource elements; wherein said circuitry configured to monitor is configured to monitor a subset of said plurality of candidate resources, said subset consisting of said at least one valid candidate resource .

According to various, but not necessarily all, embodiments of the invention there is provided an apparatus comprising: circuitry configured to generate a signal indicating that puncturing is to be applied to a bandwidth of a radio communication channel, said signal providing an indication of frequency domain resource elements within said bandwidth that are to be punctured.

In some example embodiments, said means for identifying at least one valid candidate resource comprises circuitry configure to identify at least one valid candidate resource; said means for determining comprises circuitry configured to determine; said means for receiving comprises circuitry configure to receive or a receiver; said means for monitoring comprises circuitry configured to monitor; said means for decoding comprises circuitry configured to decode or a decoder and said means for generating a signal comprises circuitry configured to generate said signal.

According to various, but not necessarily all, embodiments of the invention there is provided an apparatus, comprising: at least one processor; and at least one memory including computer program code; the at least one memory and the computer program code configured to, with the at least one processor, cause the apparatus at least to perform:

monitoring a plurality of candidate resources within a bandwidth of a radio communication channel; determining that puncturing is applied to some frequency domain resource elements within said bandwidth; identifying at least one valid candidate resource within said bandwidth, said at least one valid candidate resource comprising less than at least one predetermined threshold amount of punctured resource elements; wherein said step of monitoring comprises monitoring a subset of said plurality of candidate resources, said subset consisting of said at least one valid candidate resource.

According to various, but not necessarily all, embodiments of the invention there is provided an apparatus, comprising: at least one processor; and at least one memory including computer program code; the at least one memory and the computer program code configured to, with the at least one processor, cause the apparatus at least to perform: generating a signal indicating that puncturing is to be applied to a bandwidth of a radio communication channel, said signal providing an indication of frequency domain resource elements within said bandwidth that are to be punctured.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION

Some example embodiments will now be described with reference to the accompanying drawings in which:

FIG. 1 illustrates existing NR initial access signals and channels with 15kHz subcarrier spacing;
Fig. 2 illustrates synch raster points at below 3 GHz;
Fig. 3 illustrates 1DMRS allocation in PBCH PRB with four different frequency domain shifts as a function of physical cell ID
Fig. 4 illustrates different possible PDCCH scenarios;
Fig. 5A illustrates PDCCH candidate resources with different aggregation levels;
Fig. 5B illustrates valid and valid PDCCH candidate resources according to an example embodiment;
Fig. 6 illustrates a flow chart showing an example embodiment of a method performed at a user equipment;
Fig. 7 illustrates a flow chart showing a different example embodiment of a method performed at a user equipment;
Fig. 8 illustrates a user equipment and network node according to example embodiment; and
Fig. 9 illustrates a flow chart showing an example embodiment of a method performed at a network node.

## DETAILED DESCRIPTION

Before discussing the example embodiments in any more detail, first an overview will be provided.

Embodiments relate to supporting reduced size dedicated spectrum bandwidths in NR where a portion of the bandwidth for the radio communication channel is punctured and may be used for transmitting other signals. The other signals may be e.g. GSM-R signals, or any signals transmitted in the neighbouring frequency band(s). In effect the CORESET defining the set of physical resources, including radio communication channel bandwidth for the associated PDCCH, may be greater than the allowed bandwidth for the reduced sized bandwidth NR signals. In order for an apparatus monitoring for signals within candidate resources within the radio communication channel not to be unduly affected by this puncturing, embodiments provide an indication that puncturing has been applied to the bandwidth to the apparatus monitoring the channel, and the apparatus uses this information to identify candidate resources that are deemed to be valid. That is candidate resources that have no or fewer than a threshold amount of resource elements that are punctured. The apparatus is configured to only monitor these valid candidate resources and not to monitor candidate resources where puncturing is above a threshold level. In this way energy is not used trying to decode signals in candidate resources that can not carry the NR signals and false positives from the monitoring of such resources is avoided or at least reduced.

The candidate resources may be within a user defined search space(s). A user defined search space is one monitored by the apparatus or user equipment in connected mode. Such a search space uses a hashing function to randomise the starting position of a candidate resource, the other candidate resources being at set distances from this first candidate resource. Embodiments are particularly applicable to a user specific search space. A common search space that is applied to every user equipment (UE) before a dedicated channel is established and where the candidate resources are within predetermined positions would be easier to manage.

The outcome from monitoring a valid candidate resource within a PDCCH (physical downlink control channel) for example, can be either:

No PDCCH detected whereupon there is no action for the apparatus, or
PDCCH detected whereupon the UE will act according to the received PDCCH (i.e. it will e.g. receive PDSCH via DL and/or transmit PUSCH or PUCCH via UL.

In summary, example embodiments provide a novel monitoring rule for radio communication channels such as PDCCH where puncturing has been applied.

- A UE is made aware of the CORESET puncturing - i.e. which resource elements such as PRBs are punctured (or which are not punctured). This may be done by way of a puncturing pattern. The puncturing pattern may be described by a bitmap of N bits (N may be 24 for example), where each bit represents one resource element such as a PRB, a value of 1 may be used to indicate that the PRB is transmitted, while a value of 0 may indicate that it is not, i.e. it is punctured.
- UE's PDCCH monitoring is updated:

  ○ PDCCH candidate is monitored by masking the involved CCEs with a puncturing pattern (if any), if the amount of overlap with punctured PRBs at most X%. Masking allows the UE to respond to the puncturing applied at the network. In mathematical terms it may be viewed as multiplication of the corresponding (punctured) resource elements (subcarriers) by zero. In other words, the receiver nulls the punctured resource elements while keeping the receiver chain otherwise unchanged.
  ○ Otherwise PDCCH candidate is skipped i.e. not monitored

    ▪ Where there is full overlap with punctured PRBs or
    ▪ Where overlap with punctured PRBs is at least by X% (X could be e.g. 50%)

  ○ End

- X is a threshold which can be configured via RRC or determined according to specs

  ○ In an example embodiment, X is defined separately for each aggregation level (or at least two AL levels)
  ○ In one embodiment X may be expressed as a percentage. Depending on the scenario, X may be defined also as the number of CCEs or PRBs (i.e. absolute threshold)

- Depending on the example embodiment puncturing may be done with resolution of CCE or PRB

  ○ This means that for given puncturing pattern, the amount of puncturing may be different for CCE-based resolution and PRB - based resolution
  ○ If puncturing is done with resolution of CCE, the whole CCE may be considered as punctured if one or more PRBs is covered by the puncturing pattern.

These example embodiments are applicable to scenarios that are emerging in which it may be beneficial to enable the operation of 5G NR (new radio) in a narrower bandwidth than the 5MHz channels for which it was originally designed. For example, deployment of NR in the 900 MHz FRMCS (future railway mobile communication system) band needs to take place alongside legacy GSM-R (Global System for Mobiles - Railway) carriers within a 5.6MHz bandwidth. This requirement leaves only about 3 - 3.6 MHz to be used for NR. Similarly, there are some cases where only 3 MHz channels are available for NR.

Extending 5G services to these and other specialized vertical use cases calls for the ability to deploy NR in dedicated spectrum bandwidths below 5MHz. For example, in Europe it has been decided that the Future Railway Mobile Communication System (FRMCS) which will replace GSM-R will use NR. Soft migration from GSM-R to FRMCS is expected to take place between around 2025 and 2035; this will necessitate co-existence of GSM-R and NR within $2 \times 5.6$ MHz of FDD spectrum, leaving approximately 3.6 MHz for NR operation. Other similar use cases include smart grids ($2 \times 3$ MHz FDD in US) and public safety ($2 \times 3$ MHz FDD in Europe). These vertical use cases do not impose constraints on device complexity. It would be desirable, therefore, to adapt NR to the available dedicated spectrum allocations with few changes, building on the existing ecosystem of NR devices and infrastructure.

With this in mind, the synchronization signals used can be retained without change (since their bandwidth is less than 2 MHz), while straightforward puncturing of the edges of channels such as the Physical Output Channel (PBCH) and Physical Downlink Control Channel (PDCCH) may be the preferred way to provide resource for these signals.

In terms of RF requirements, existing filtering assumptions from the 5 MHz NR channel bandwidth could be retained for the range of transmitted bandwidths required for FRMCS, since the same operator would be deploying the adjacent GSM-R and FRMCS systems, thus allowing the co-existence aspects to be managed. A new channel bandwidth perhaps around 3 MHz may be specified for the smaller dedicated spectrum bandwidths for the other use cases. However, NR deployment with 3 MHz channel bandwidth can be considered also for FRMCS scenarios.

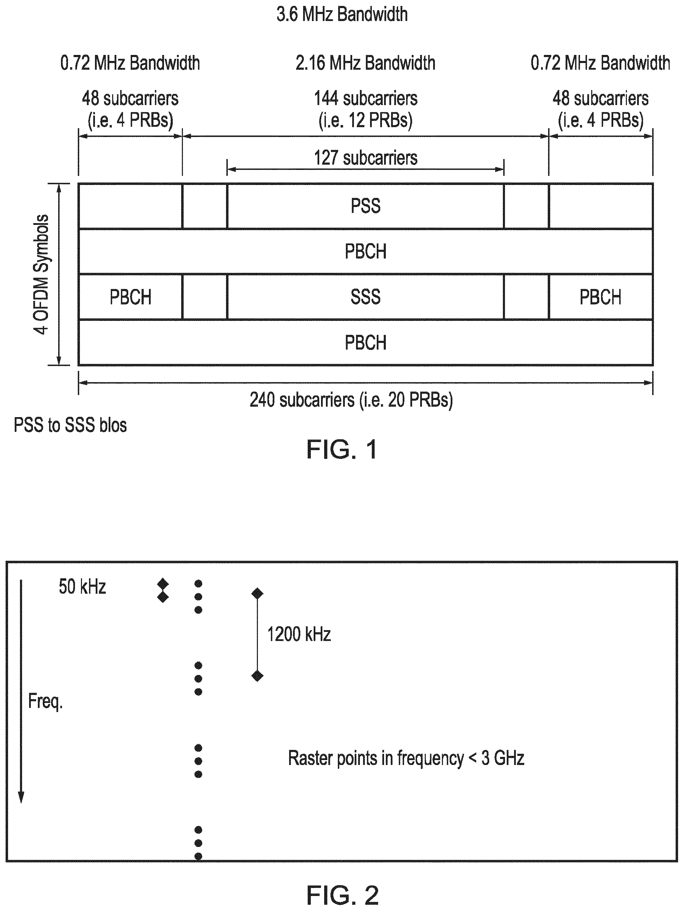

Fig. 1 shows some of the signals and channels transmitted by the NR base stations (gNBs) that are not designed for transmission in such narrow channels, more specifically signals and channels of the synchronization signal and PBCH block (SSB).

In initial cell selection (~initial access) the UE searches primary synchronization signal (PSS) of the SSB on the predefined synch raster points in frequency. In other words, the synchronization raster indicates the possible frequency positions of the synchronization block that can be used by the UE for system acquisition when explicit signalling of the synchronization block position is not present. A global synchronization raster is defined for all frequencies. The frequency position of the SS block is defined as SS block reference frequency position (SSREF) with corresponding Global Synchronization Channel Number (GSCN) [3GPP TS 38.101].

**Table 5.4.3.1-1: GSCN parameters for the global frequency raster**

| Frequency range | SS Block frequency position SS$_{REF}$ | GSCN | Range of GSCN |
|---|---|---|---|
| 0 – 3000 MHz | N * 1200kHz + M * 50 kHz, N=1:2499, M ∈ {1,3,5} (Note 1) | 3N + (M-3)/2 | 2 – 7498 |
| 3000 – 24250 MHz | 3000 MHz + N * 1.44 MHz N = 0:14756 | 7499 + N | 7499 – 22255 |
| NOTE 1: The default value for operating bands with SCS spaced channel raster is M=3. | | | |

Synch raster points at below 3 GHz are defined in clusters of three points as illustrated in Fig. 2

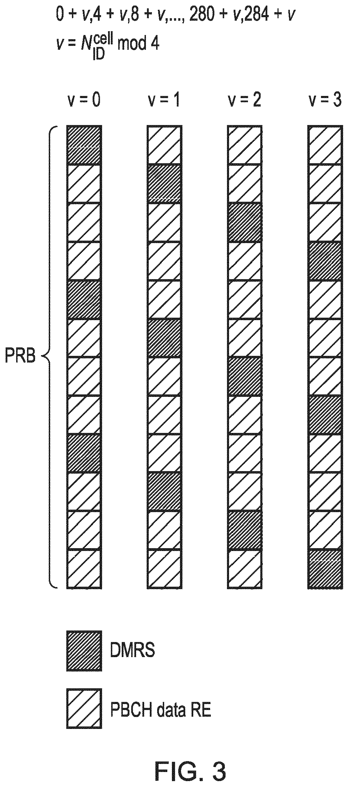

Upon detection of the PSS and consequently the secondary synchronization signal (SSS) the UE performs demodulation of the PBCH using the channel estimates calculated from the PBCH DMRS (demodulation reference signal). DMRS for NR-PBCH is mapped on every NR-PBCH symbol with density across NR-PBCH with 3 RE (reference element)s/PRB(physical resource block)/Symbol. DMRS have the same RE position in all NR-PBCH symbols as illustrated Fig. 3. The frequency shift v for the DMRS locations (shown in Fig. 3) is determined by the physical cell ID, which in turn is determined by the PSS and SSS sequences.

In order to analyze the PDCCH functionality (physical downlink control channel), it's necessary to understand how PDCCH is mapped to physical resources. CORESET (control resource set) is a set of physical resources (i.e., a specific area on NR Downlink Resource Grid) and a set of parameters that is used to carry PDCCH. CORESET involves many parameters configurable by RRC (radio resource control). CORESET#0 is the one transmitting PDCCH for SIB$_1$ (system information block) scheduling and it cannot be configured by RRC since it is used before the RRC connection is established.

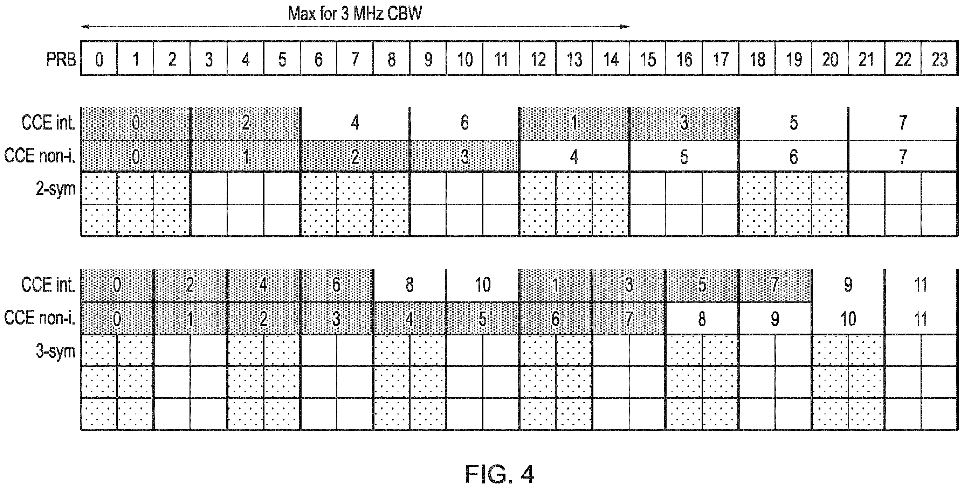

Fig. 4 shows CORESET structures with 2 and 3 OFDM (orthogonal frequency division multiplexing) symbols and 24 PRBs (i.e., 4.32 MHz with 15 kHz SCS). Both interleaved and non-interleaved Control Channel Element (CCE) mapping with Resource Element Group (REG) bundle size = 6 are considered. According to current NR specification, CORESET#o utilizes always interleaved CCE mapping while dedicated CORESETs (i.e., for CORESETs other than CORESET#o) can be configured to apply either interleaved or non-interleaved CCE mapping.

It can be observed from Fig. 1 that PDCCH puncturing is required for the scenarios involving spectrum allocation from approximately 3 MHz up-to below 5 MHz. It can also be noted that non-interleaved CCE mapping may be preferred for user specific search spaces.

PDCCH processing capabilities of the UE are limited depending on the SCS (subcarrier spacing), primarily to enable low processing latencies, with up to e.g. 44 blind decodes and 56 CCEs for channel estimation per slot in the case of 15kHz SCS. However, on a primary cell where all types of CSSs (common search space) are monitored, gNB is allowed to configure a number of BDs/CCEs per slot that exceeds the UE processing limits, which is further referred to as *overbooking.* Based on configuration and for each slot, UE and gNB map PDCCH candidates according to the same mapping rules, where Common Search Space (CSS) is mapped before UE-specific Search Space (USS), USSs are mapped with increasing SS-set index, and for the USS part entire SS-set(s) may not be mapped in a given slot if the UE processing limits would be exceeded.

The mapping of PDCCH candidates of an SS-set to CCEs of the associated CORESET is implemented by means of a hash function. 5G NR uses the legacy hash function of LTE EPDCCH (enhanced physical downlink control channel). It randomizes the allocation of the PDCCH candidates within the $p$-th CORESET in slot $k$ (0, 1, 2, ...) according to

$$L\left\{\left(Y_{p,k} + j_{p,m}^{(L)}\right) \bmod \left\lfloor N_{\text{CCE},p} / L \right\rfloor\right\} + i,$$

simplified here for single carrier operation with a single SS-set, where,

- *L* is the number of CCEs for the AL the UE monitors,
- $N_{CCE,D}$ is the total number of CCEs for the given p-th CORESET,
- $m\ (0, 1, ..., M_p^{(L)} - 1)$ is the candidate index and $M_p^{(L)}$ is the number of PDCCH candidates for the AL that the UE monitors,
- *i* (0, 1, ..., *L* - 1) is the contiguous CCE index of the PDCCH candidate,
- $j_{p,m}^{(L)} = \left\lfloor \dfrac{m \cdot N_{CCE,p}}{L \cdot M_p^{(L)}} \right\rfloor$ are the starting CCE indexes of the $M_p^{(L)}$ subbands
- $Y_{p,k}$ = 0 for CSS,
- $Y_{p,k}$ (0, 1, ..., $2^{16}$ - 1) for USS is a pseudo-random variable based on the RNTI (radio network temporary identifier) of the user and based on slot index *k*,
- *p* (0, 1,..., 11) is for indication of a CORESET, and
- $\lfloor . \rfloor$ denotes the floor operation.

A particularity of the 5G NR hash function is that it divides a CORESET into a number of $M_p^{(L)}$ subbands and allocates a single PDCCH candidate per subband, where only the starting point of the first (*m* = o) PDCCH candidate is randomized within the CORESET, while the allocation of the further $(m = 1, 2, ..., M_p^{(L)} - 1)$ PDCCH candidates is deterministic and approximately equidistant (like a comb pattern), with wrap around the CCEs of the CORESET.

According to NR design,

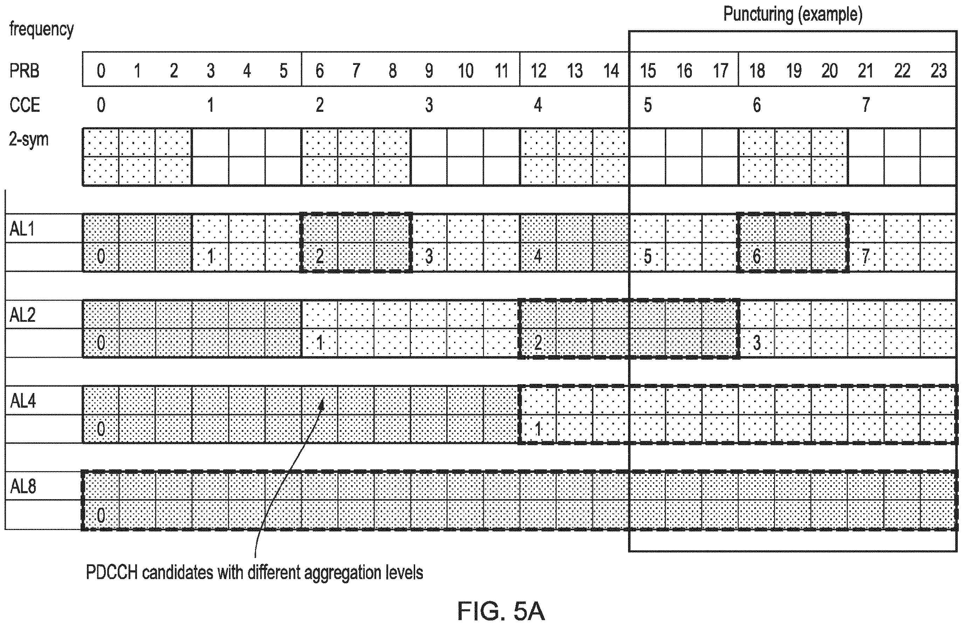

- CORESET is configured with 6-PRB bitmap, i.e. one bit in a bitmap determining the frequency allocation of the CORESET corresponds to 6 PRBs
- For USS, hashing is always applied 4 PDCCH candidates for certain Aggregation Level (AL) are selected in pseudo-random manner, as shown in Fig. 5A
- The hashing works in such a way that

  ○ First candidate is selected randomly
  ○ Other candidates for certain AL are spread evenly (with wrap-around) in frequency (over the predefined subbands)
  ○ the number of subbands depends on M (i.e. the number candidates per aggregation level)

As might be recognized UE's PDCCH monitoring does not work optimally when puncturing is applied (in the example of Fig. 5A, PRBs #15...#23 are not transmitted, i.e. punctured). However, when following Rel-17 rules, UE should detect all PDCCH candidates (irrespective of puncturing).

The problem to be addressed might be considered as how to control radio channel such as PDCCH monitoring in the case when CORESET is punctured. The puncturing of the CORESET can lead to the monitored signal including PRBs that are not transmitted leading to higher interference. In this way the puncturing of the CORESET may result in a false positive problem due to the high (GSM) interference on the punctured PRBs. The interference problem might be reduced were PDCCH PRBs that are not transmitted (i.e. are punctured) are not monitored.

The UE may realise that puncturing is applied either from a signal indicating this explicitly sent by the network or from the relative locations of the PSS and SSS blocks and the raster points. In some examples embodiments detecting PSS/SSS at certain sync raster point means that certain puncturing pattern is applied. For example, where two PRBs at a lower frequency to the SSB and 3 PRBs at higher frequency to the SSB (i.e. 15 PRBs are valid and the same 15 PRBs overlapping in frequency would be valid for CORESET).

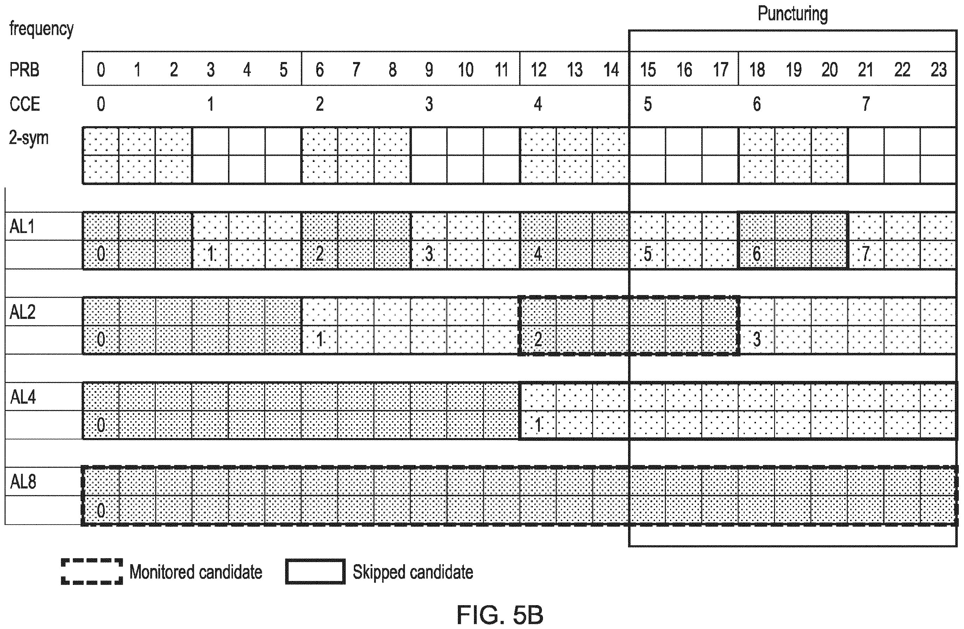

Fig. 5B shows example of the proposed monitoring rule. In this example X=55%

- CORESET size = 24 PRBs. UE knows that PRBs #15...23 are punctured
- In the considered monitoring occasion UE is expected to monitor candidate #6 (AL1), candidate #2 (AL2), candidate #1 (AL4) and candidate #0 (AL8)

  ○ Candidate #6 (AL1) is dropped (amount of puncturing = 100% > X)
  ○ Candidate #2 (AL2) is monitored (amount of puncturing = 50% < X)
  ○ Candidate #1 (AL4) is dropped (amount of puncturing = 75% > X)
  ○ Candidate #0 (AL8) is monitored (amount of puncturing = 37.5% < X)

A further complementary embodiment with a new interpretation for the hashing function is detailed below.

In this example embodiment the hashing function is modified in such that it operates based on "valid" CCEs of the CORESET (rather than all CCEs). Valid CCEs are determined based on the puncturing info.

- $N_{cce,p}$ (in the hashing function) is replaced by a valid number of CCEs ($N_{cce,p} \rightarrow N_{cce,p, actual}$).

    ○ In the preferred embodiment, $N_{cce,p, actual}$ is made a function of AL ($N_{cce,p} \rightarrow N_{cce,p, actual, L}$)

- How to define the $N_{cce,p, actual, L}$

    ○ CCEs part of fully punctured PDCCH candidates are considered as **invalid CCEs**
    ○ CCEs part of non-punctured and partially punctured PDCCH candidates are considered as valid or invalid CCEs

      ▪ If the amount of puncturing of is below a threshold ($X_L$), then CCEs of the PDCCH candidate are considered as **valid CCEs** in hashing
      ▪ Otherwise CCEs of the PDCCH candidate are considered as **invalid CCEs** in hashing.

    ○ CCEs part of non-punctured PDCCH candidates are considered as valid CCEs

- In the baseline scenario, puncturing is done from the CCEs with the largest CCE indexes.

- In a variant puncturing is done from both ends of the CORESET. This can be made by means of additional term in the hashing function (+ $P_{low}$)

    ○ $P_{low}$ indicates the number of punctured CCEs (full) from low end of the CORESET

$$L \cdot \left\{ \left( Y_{p,n_{s,i}^\mu} + \left\lfloor \frac{m_{s,n_{CI}} \cdot N_{CCE,p}}{L \cdot M_{s,max}^{(L)}} \right\rfloor + n_{CI} \right) \mathrm{mod} \left\lfloor N_{CCE,p} / L \right\rfloor \right\} + i \ + P_{low}$$

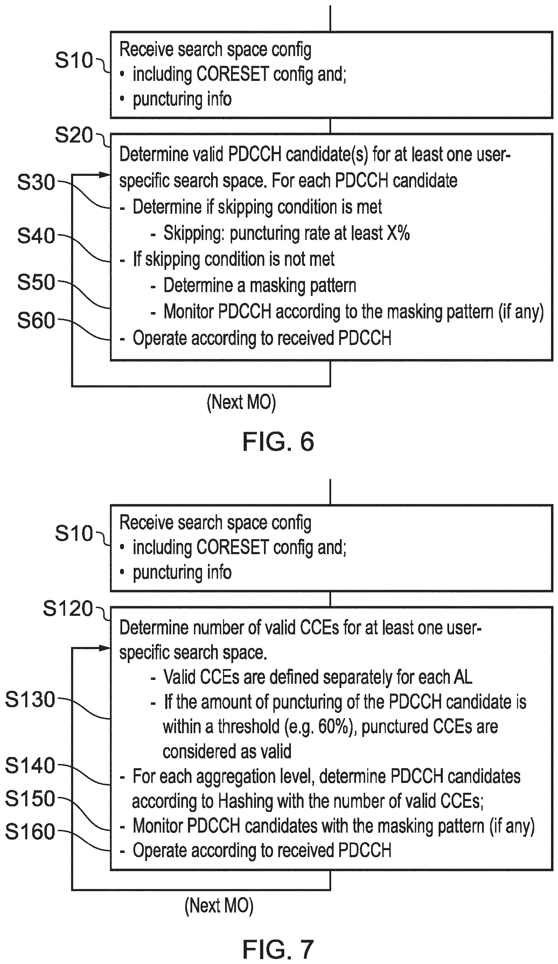

Fig. 6 shows a flow diagram schematically illustrating steps performed at a user equipment UE according to an example embodiment.

Fig. 6 shows the high level operation. The upper box step S10 is done via RRC (search space configuration), while the second box steps S20 to S60 is performed for each monitoring occasion.

Step S10 shows the initial steps where the apparatus or user equipment receives the search space configuration, that is the configuration of the space that is to be monitored for candidate resources. This includes the CORESET configuration and puncturing information indicating what part of the resources available for PDCCH, and defined by the CORESET is punctured and in some cases the source elements that are punctured. The next steps are performed for each monitoring occasion, and comprise a first step S20 in the monitoring procedure where the user equipment determines PDCCH (physical downlink control channel) candidate resources for at least one user specific search base that comprise at least one valid resource element, that is a resource element that is not punctured. Then at step S30 for each determined PDCCH candidate resource the user equipment determines if the skipping condition is met or not. The skipping condition comprises determining whether the puncturing ratio of resource elements to all elements within the resource candidate is at least x%.

If the skipping condition is not met, i.e. the puncturing rate is smaller than this, then a masking pattern is determined at step S40. The masking pattern reflects the punctured resource elements in the candidate resource. The PDCCH candidate resources are then monitored at step S50 with the masking pattern, where there is one, applied such that where a candidate resource is partially punctured the punctured resource elements are masked (e.g. multiplied by zero).

The user equipment will then operate according to the received and decoded signal from the valid candidate resources of the PDCCH at step S60.

Steps S20 to S60 are then repeated at the next monitoring occasion.

Fig. 7 shows a flow diagram according to a further different embodiment. In this embodiment, there is an initial step S10 as in the method Fig. 6, where the search base configuration is received which includes the CORESET configuration and puncturing information. Then when a monitoring occasion arises at step S120 the number of valid control channel elements (CCEs) for at least one user specific search base is determined. Valid CCEs may be defined separately for each aggregation level. That is the threshold of punctured resource elements to all resource elements that indicate whether a candidate resource element is valid or not may change according to the aggregation level. Aggregation levels have different number of resource elements within candidate resources and in some embodiments, candidate resources in aggregation levels with more resource elements may be deemed valid with a greater degree of puncturing.

Then at step S130 it is determined if the amount of puncturing of the PDCCH candidate is within a threshold or not. If it is then the punctured CCEs are considered as valid.

Then at step S140 for each aggregation level, PDCCH candidate resources are identified within a user defined search space according to a hashing function, the hashing function having been updated to replace the total number of CCEs with the total number of valid CCEs for that aggregation level.

It is then determined for these identified PDCCH candidate resources whether they comprise any punctured resource and if so a masking pattern related to and masking the pattern of punctured resources is generated and applied at step S150. The user equipment at step S160 will then operate according to the decoded signal received in the identified valid candidate resources of the PDCCH.

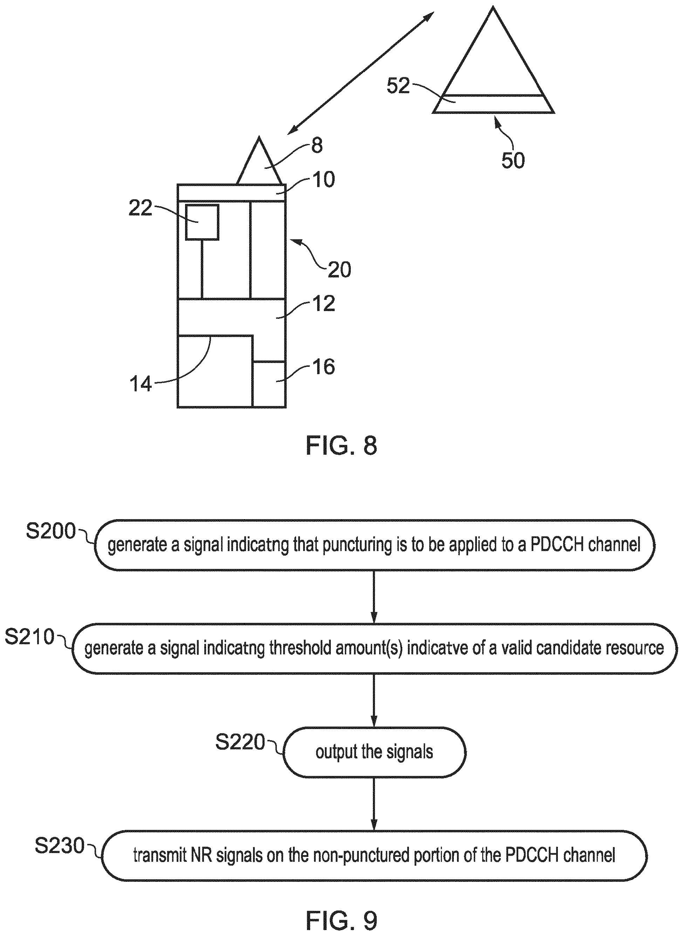

Fig. 8 shows apparatus in a communication system according to an example embodiment. The system has a user equipment or user terminal 20 configured to communicate with a network node 50, which may be a NR, gNB network node. The user equipment is configured to perform the method according to Figs 6 or 7. The network node is configured to perform the method according to Fig. 9 described later.

User equipment 20 comprises an antenna 8 for transmitting and receiving signals from network node 50. The signals received may include a signal indicating the search base configuration which includes the CORESET configurations setting the bandwidth of radio communication channels such as PDCCH along with puncturing information related to such communication channels.

The apparatus comprises determining circuitry 10 that is configured to determine from the received signals that puncturing is applied to some frequency domain resource elements within the bandwidth of a communication channel and also in some embodiments the resource elements that are punctured.

The user equipment further comprises identifying circuitry 12 configured to receive signals from the determining circuitry 10 and to identify which candidate resources within the radio communication channel that is to be monitored are valid and which are not.

The identifying circuitry 12 may comprise comparison circuitry 14 which is configured to compare the number of resource elements within a candidate resource that are punctured with a threshold value. Where the number of punctured elements are above a threshold value then the determining circuitry may determine that the resource is invalid whereas where they are below they may be considered valid. The threshold value may vary depending on the aggregation level.

Alternatively and/or additionally the identifying circuitry 12 may comprise hashing function circuitry 16 which is configured to determine valid candidate resources within a user defined search space using an adapted hashing function. The hashing function circuitry 16 has as an input a number of valid resource elements within a bandwidth of a radio communication channel to be monitored and uses this in place of the total number of resource elements within the bandwidth in the hashing function. The number of valid resource elements may be determined from the number of punctured and non-punctured resources within the bandwidth and from a threshold value indicating a threshold value of punctured resource elements to non-punctured resource elements which would make a resource element valid or not. This may vary depending on the aggregation level of the bandwidth being considered.

In some example embodiments where the puncturing is at both the high and the low end of the channel bandwidth the hashing function may also have as an input a value indicating the number of punctured CCEs at the lower end of the radio communication bandwidth defined by the CORESET, this input value may be used by the hashing function to shift the user defined search space in frequency when identifying the valid candidate resources.

User equipment 20 further comprises monitoring circuitry 22 configured to monitor candidate resources within a bandwidth of the radio communication channel for signals or data. The monitoring circuitry 22 is configured to monitor a subset of the plurality of candidate resources within the bandwidth, the subset consisting of the candidate resources that have been identified as valid by the identifying circuitry 12.

The network node 50 is configured to transmit new radio reduced bandwidth signals within dedicated spectrum bandwidths of less than 5 MHz towards the user equipment 20. The network node 50 is configured to generate and transmit these signals within a portion of the radio communication channel. In some embodiments, other signals are transmitted within a further portion of the radio communication channel. The further portion is the punctured portion.

The Network node 50 comprises signal generation circuitry 52 configured to generate a signal indicating that puncturing is to be applied to a bandwidth of a radio communication channel such as PDCCH that it is to transmit or broadcast. The network node 50 also generates and transmits or broadcasts signals indicating the CORESET configuration which includes the bandwidth of a radio communication channel such as PDCCH.

The signal generated indicating that puncturing is to be applied may provide an indication of the frequency domain resource elements within the bandwidth that are to be punctured. In some embodiments, the signal generation circuitry 52 may also generate a signal indicating at least one threshold amount, the threshold amount indicating a threshold number of punctured frequency domain resource elements within the candidate resources that would indicate whether the candidate resource is valid or not. In some embodiments, the signal generation circuitry may generate a number of these threshold values each one appropriate to a different aggregation level.

Fig. 9 shows a flow diagram illustrating steps in a method performed at a network node according to an example embodiment. In a first step S200 a signal indicating that puncturing is to be applied to signals within a PDCCH channel is generated. At step S210 a signal indicating one or more threshold amounts that are indicative of a valid candidate resource is generated. There may be a single threshold amount generated or there may be a plurality of threshold amounts generated. Where there is a plurality of threshold amounts, these may be linked to an aggregation level of the signals within the PDCCH channel.

At step S220 the signals are output and at step S230 a new radio signal is transmitted on the non-punctured portion of the PDCCH channel.

In summary the method and apparatus provide robust performance for scenarios involving punctured CORESET. In some embodiments, they require no changes to the hashing function, while in others they may require some changes of input values but no fundamental changes to the hashing function. The hashing function may be difficult to vary as it may in some cases be quite hard-coded in the implementation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. An apparatus, comprising:

 means for monitoring a plurality of candidate resources within a bandwidth of a radio communication channel;
 means for determining that puncturing is applied to some frequency domain resource elements within said bandwidth;
 means for identifying at least one valid candidate resource within said bandwidth, said at least one valid candidate resource comprising a candidate resource with less than at least one predetermined threshold amount of punctured resource elements; wherein
 said means for monitoring is configured to monitor a subset of said plurality of candidate resources, said subset consisting of said at least one valid candidate resource.

2. An apparatus according to claim 1, wherein said means for monitoring is configured for each valid candidate resource within said subset to determine whether said valid candidate resource comprises at least one punctured frequency domain resource element and where so to apply a masking function to mask a punctured portion of said at least one valid candidate resource prior to monitoring said at least one valid candidate resource.

3. An apparatus according to claim 1, wherein said at least one predetermined threshold amount comprises one of:

 a percentage value indicative of a ratio of punctured frequency domain resource elements and all frequency domain resource elements within said candidate resource; or
 an indication of a number of frequency domain resource elements that are punctured within said candidate resource.

4. An apparatus according to any preceding claim, wherein said set of candidate resources comprise candidate resources of at least two different sizes in at least two different aggregation levels.

5. An apparatus according to any preceding claim, wherein said means for identifying said at least one valid candidate resource is configured to compare punctured resource elements within said plurality of candidate resources with a plurality of predetermined threshold amounts.

6. An apparatus according to any one of claims 4 or 5, wherein said means for identifying said at least one valid candidate resource is configured to compare said punctured resource elements within said plurality of candidate resources in at least two of said at least two different aggregation levels with at least two corresponding different predetermined threshold amounts.

7. An apparatus according to any preceding claim, said apparatus further comprising means for determining said at least one predetermined threshold amount, said means for determining said at least one predetermined threshold amount comprising means for receiving a signal comprising an indication of said at least one predetermined threshold amount.

8. An apparatus according to any preceding claim, wherein said means for determining that puncturing is applied to some frequency domain resource elements within said bandwidth comprises one of the following:
 receiving a signal indicating puncturing is applied, wherein said signal indicating puncturing is applied preferably further comprises an indication of which frequency domain resource elements are subject to puncturing; or determining from a synchronization raster point at which the primary and secondary synchronisation signals are detected and a location of a synchronisation block that puncturing is applied.

9. An apparatus according to any preceding claim, wherein said plurality of candidate resources are located within a user equipment defined search space and are located within said search space according to a hashing function, said hashing function comprising a number of frequency domain resource elements within said bandwidth of said radio communication channel as an input value;
 said means for monitoring is configured to monitor said subset of said plurality of candidate resources by using said hashing function adjusted to reflect said puncturing to locate said candidate resources, said hashing function being adjusted such that said number of frequency domain resource elements input to said hashing function is reduced to a number of said valid resource elements.

10. An apparatus configured to transmit new radio reduced bandwidth signals within dedicated spectrum bandwidths of less than 5MHZ, by transmitting said new radio reduced bandwidth signals within a portion of a radio communication channel, and other signals within a further portion of said radio communication channel, said apparatus being configured to:

generate a signal indicating that puncturing is to be applied to a bandwidth of said radio communication channel, said signal providing an indication of frequency domain resource elements within said bandwidth that are to be punctured; and to output said generated signal; and

generate a signal indicative of at least one of a threshold amount of punctured frequency domain resource elements within candidate resources, frequency domain resource elements within said candidate resources below said threshold amount being indicative of a valid candidate resource.

11. An apparatus according to claim 10, said apparatus being further configured to generate a signal indicative of a plurality of predetermined threshold amounts of punctured frequency domain resource elements corresponding to a plurality of different aggregation levels.

12. An apparatus according to any one of claims 10 or 11, said apparatus being further configured to generate and output a synchronization raster point at which the primary and secondary synchronisation signals are to be output and a location of a synchronisation block, said raster point and location of said synchronisation block indicating that puncturing is applied

13. A method comprising:

monitoring a plurality of candidate resources within a bandwidth of a radio communication channel; determining that puncturing is applied to some frequency domain resource elements within said bandwidth; identifying at least one valid candidate resource within said bandwidth, said at least one valid candidate resource comprising less than at least one predetermined threshold amount of punctured resource elements; wherein said step of monitoring comprises monitoring a subset of said plurality of candidate resources, said subset consisting of said at least one valid candidate resource.

14. A method comprising: generating a signal indicating that puncturing is to be applied to a bandwidth of a radio communication channel, said signal providing an indication of frequency domain resource elements within said bandwidth that are to be punctured;

generating a signal indicative of at least one of a threshold amount of punctured frequency domain resource elements within candidate resources, frequency domain resource elements within said candidate resources below said threshold amount being indicative of a valid candidate resource; and outputting said generated signals.

15. A computer program which when executed by a processer on an apparatus is operable to control said apparatus to perform a method according to claim 13 or 14.

3.6 MHz Bandwidth

| 0.72 MHz Bandwidth | 2.16 MHz Bandwidth | 0.72 MHz Bandwidth |
|---|---|---|
| 48 subcarriers (i.e. 4 PRBs) | 144 subcarriers (i.e. 12 PRBs) | 48 subcarriers (i.e. 4 PRBs) |

127 subcarriers

| | | PSS | | |
|---|---|---|---|---|
| PBCH | | | | |
| PBCH | | SSS | | PBCH |
| PBCH | | | | |

4 OFDM Symbols

240 subcarriers (i.e. 20 PRBs)

PSS to SSS blos

## FIG. 1

50 kHz

1200 kHz

Freq.

Raster points in frequency < 3 GHz

## FIG. 2

$0 + v, 4 + v, 8 + v, ..., 280 + v, 284 + v$

$v = N_{ID}^{cell} \bmod 4$

FIG. 3

FIG. 4

EP 4 266 618 A1

Puncturing (example)

frequency

| PRB | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| CCE | 0 | | | 1 | | | 2 | | | 3 | | | 4 | | | 5 | | | 6 | | | 7 | | |

2-sym

AL1 0 1 2 3 4 5 6 7

AL2 0 1 2 3

AL4 0 1

AL8 0

PDCCH candidates with different aggregation levels

FIG. 5A

Puncturing

| frequency | | | | | | | | | | | | | | | | | | | | | | | |
|---|---|---|---|---|---|---|---|---|---|---|---|---|---|---|---|---|---|---|---|---|---|---|---|
| PRB | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| CCE | 0 | | | 1 | | | 2 | | | 3 | | | 4 | | | 5 | | | 6 | | | 7 | | |

2-sym

AL1    0    1    2    3    4    5    6    7

AL2    0    1    2    3

AL4    0    1

AL8    0

╌╌╌ Monitored candidate    ▭ Skipped candidate

FIG. 5B

S10 — Receive search space config
- including CORESET config and;
- puncturing info

S20 — Determine valid PDCCH candidate(s) for at least one user-specific search space. For each PDCCH candidate

S30 — - Determine if skipping condition is met
  - Skipping: puncturing rate at least X%

S40 — - If skipping condition is not met

S50 — - Determine a masking pattern

S60 — - Monitor PDCCH according to the masking pattern (if any)
- Operate according to received PDCCH

(Next MO)

## FIG. 6

S10 — Receive search space config
- including CORESET config and;
- puncturing info

S120 — Determine number of valid CCEs for at least one user-specific search space.
  - Valid CCEs are defined separately for each AL

S130 — - If the amount of puncturing of the PDCCH candidate is within a threshold (e.g. 60%), punctured CCEs are considered as valid

S140 — - For each aggregation level, determine PDCCH candidates according to Hashing with the number of valid CCEs;

S150 — - Monitor PDCCH candidates with the masking pattern (if any)

S160 — - Operate according to received PDCCH

(Next MO)

## FIG. 7

**FIG. 8**

S200 — generate a signal indicatng that puncturing is to be applied to a PDCCH channel

S210 — generate a signal indicatng threshold amount(s) indicatve of a valid candidate resource

S220 — output the signals

S230 — transmit NR signals on the non-punctured portion of the PDCCH channel

**FIG. 9**

Europäisches
Patentamt

European
Patent Office

Office européen
des brevets

# EUROPEAN SEARCH REPORT

Application Number

EP 23 16 8369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 034 881 A (SPREADTRUM COMMUNICATIONS SHANGHAI INC) 19 July 2019 (2019-07-19) * figure 10 * * paragraph [0172] – paragraph [0179] * ----- | 1-15 | INV. H04L5/00 H04W72/23 |

TECHNICAL FIELDS
SEARCHED      (IPC)

H04L
H04W

The present search report has been drawn up for all claims

| Place of search | Date of completion of the search | Examiner |
|---|---|---|
| The Hague | 1 September 2023 | Gimmler-Dumont, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 8369

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2023

| Patent document cited in search report | | Publication date | Patent family member(s) | Publication date |
|---|---|---|---|---|
| CN 110034881 | A | 19-07-2019 | NONE | |

For more details about this annex : see Official Journal of the European Patent Office, No. 12/82